# FASCICULE DE BREVET EUROPEEN

(11) **EP 2 279 902 B1**
(45) Date de publication et mention de la délivrance du brevet: **24.12.2014**
(21) Numéro de dépôt: 10305807.9
(22) Date de dépôt: 21.07.2010
(51) Int. Cl.: B60N 2/30, B60N 2/36, B60R 13/01

(54) **Véhicule automobile avec un plancher partiellement pivotant**
Kraftfahrzeug mit einem teilweise schwenkbaren Fussboden
Automotive vehicle with a partially pivoting floor

(30) Priorité: 23.07.2009 FR 0955147
(43) Date de publication de la demande: 02.02.2011
(73) Titulaire: Faurecia Automotive Industrie, 92000 Nanterre (FR)
(72) Inventeur: Decorme, Jacques, 08090, Montcy Notre Dame (FR)
(74) Mandataire: Blot, Philippe Robert Emile

(56) Documents cités:
- EP-A1- 1 256 488
- DE-A1- 10 012 590
- FR-A1- 2 883 522
- US-A- 2 997 335

## Description

L'invention concerne en général les véhicules automobiles, notamment l'aménagement intérieur de ces véhicules.

Plus précisément, l'invention concerne un véhicule automobile selon le préambule de la revendication 1.

Un tel véhicule est connu de FR 2 883 522 ou de EP 1 256 488.

On a observé que le volet peut se bloquer lors de ses déplacements et qu'il peut vibrer lorsqu'il est en position soulevée.

Dans ce contexte, l'invention vise à proposer un véhicule automobile qui soit plus fiable.

A cette fin, l'invention porte sur un véhicule selon la revendication 1.

Le véhicule peut également présenter une ou plusieurs des caractéristiques des revendications 2 à 13.

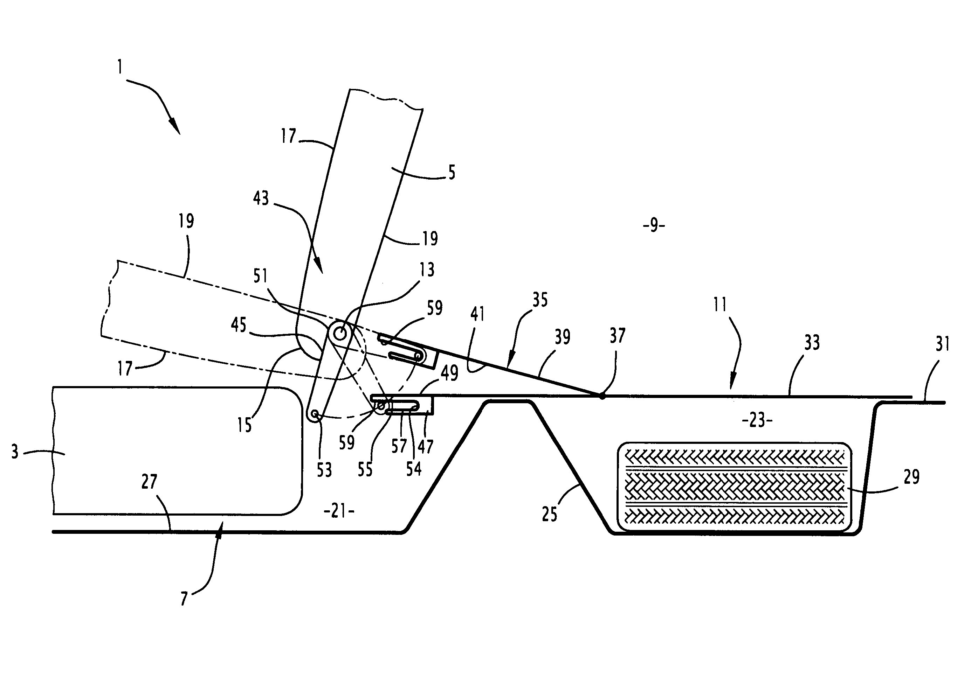

D'autres caractéristiques et avantages de l'invention ressortiront de la description détaillée qui en est donnée ci-dessous, à titre indicatif et nullement limitatif, en référence à la figure unique annexée représentant de manière schématique un siège du véhicule, le plancher de l'espace de chargement et le mécanisme de déplacement du volet du plancher.

Dans la description qui va suivre, l'avant, l'arrière, les directions longitudinale et transversale, sont entendues relativement au sens de déplacement normal du véhicule.

Le véhicule automobile représenté partiellement sur la figure comprend :
- un siège 1, avec une assise 3 et un dossier mobile 5;
- un châssis 7 sur lequel est fixé le siège 1 ;
- un espace de chargement 9 situé à l'arrière du dossier 5, délimité vers le bas par un plancher 11.

Le siège 1 est un siège de rang 2 ou de rang 3 du véhicule, c'est-à-dire un siège faisant partie d'une rangée de sièges située à l'arrière du siège du conducteur du véhicule.

Dans un mode particulier de construction, l'assise 3 est par exemple rigidement fixée sur le châssis 7. Le dossier 5 est lié au châssis 7, ou à une autre structure du véhicule, par une liaison pivot autour d'un axe sensiblement transversal 13. Ainsi, le dossier est mobile par rapport au châssis 7 autour de l'axe 13 entre une position dressée et une position rabattue vers l'avant du véhicule, représentées sur la figure respectivement en traits pleins et en traits interrompus.

L'axe 13 passe, par exemple, à travers une partie inférieure 15 du dossier située à proximité de l'assise 3. Dans la position dressée du dossier, celui-ci s'étend vers le haut et légèrement vers l'arrière à partir de l'axe 13, et donc de la partie inférieure 15. Le dossier 5 est délimité par deux grandes faces opposées 17 et 19 respectivement tournées vers l'avant du véhicule et vers l'arrière du véhicule en position dressée du dossier. Ces faces seront appelées face avant et face arrière respectivement dans la suite de la description.

Le dossier passe de la position dressée à la position rabattue par pivotement autour de l'axe 13 vers l'avant du véhicule. Dans la position rabattue, la face avant 17 est tournée vers l'assise 3 et la face arrière 19 est tournée vers le haut et légèrement vers l'arrière. La rotation permettant de passer de la position dressée à la position rabattue est par exemple d'environ 90°.

Le châssis 7 présente, par exemple, deux zones en creux, une première zone en creux 21 sous le siège 1 et une deuxième zone en creux 23 sous l'espace de chargement 9. Les deux zones en creux 21 et 23 sont séparées l'une de l'autre par un relief 25 ménagé dans le châssis 7. Dans une variante, le châssis 7 peut présenter une seule zone en creux 23 sous l'espace de chargement 9.

L'assise 3 est par exemple fixée au fond 27 de la première zone en creux 21, par tous moyens adaptés.

La seconde zone en creux 23 est prévue par exemple pour recevoir une roue de secours 29.

Un second relief 31 est ménagé dans le châssis 7, à l'arrière de la seconde zone en creux 23.

Le plancher 11 comporte au moins une zone principale 33, au moins un volet mobile 35 situé immédiatement à l'arrière du siège 1, et au moins une liaison pivot 37, articulant le volet 35 à la zone principale 33.

La zone principale 33 du plancher repose sur le châssis 7, par exemple sur les reliefs 25 et 31.

La liaison pivot 37 est d'axe sensiblement transversal. Elle est, par exemple, réalisée au moyen d'une charnière textile ou d'une charnière rapportée (pièces plastiques ou métalliques etc.).

La liaison pivot permet au volet 35 de se déplacer en rotation entre une position de repos et une position soulevée, toutes deux représentées sur la figure. Dans la position de repos, le volet est sensiblement horizontal et repose par exemple sur le relief 25. Il est alors situé dans le même plan sensiblement horizontal que la zone principale 33 du plancher.

Dans la position soulevée, le volet s'étend vers le haut et vers l'avant à partir de la liaison pivot 37. Le volet passe de sa position de repos à sa position soulevée par une rotation vers le haut d'un angle compris entre 0.5° et moins de 90°, avantageusement entre 10°et 45°et préférentiellement d'environ 15°.

Le volet 35 est délimité vers le haut par une face supérieure 39 et vers le bas par une face inférieure 41, opposée à la face supérieure.

Le volet 35 peut-être de même nature que le plancher 33 ou bien être réalisé au moyen d'une pièce rapportée. Le volet 35 est par exemple réalisé à base d'une couche de matière thermoplastique ou thermodure recouverte ou non d'une couche d'aspect et/ou d'une couche d'envers. La couche d'aspect peut être une moquette ou un TPO (thermoplastique polyoléfine) et la couche d'envers un non tissé.

Dans une variante, le volet est réalisé à base d'un feutre comprimé recouvert ou non d'une moquette ou d'un TPO sur sa face d'aspect et d'un non tissé sur sa face d'envers. Le feutre est formé à base d'un mélange de fibres de polymère, avantageusement des fibres de polypropylène avec des fibres de verre ou des fibres naturelles (bois, lin, chanvre etc.).

Dans une autre variante, le volet est réalisé à base d'une structure en PP, par exemple alvéolaire, ou à base d'une structure type "Baypreg", ou encore à base d'une structure en bois type "lsorel" ou "MDF" etc. Il peut être recouvert d'une moquette.

Quand le dossier 5 est dans sa position rabattue et le volet 35 dans sa position soulevée, la face arrière 19 du dossier 5 est située dans le même plan que la face supérieure 39 du volet 35. Ceci est vrai pour une position particulière de la liaison pivot 37 par rapport au dossier 5. Dans d'autres positions de la liaison pivot 37 par rapport au dossier 5, la face arrière 19 pourrait former un angle non nul avec la face supérieur 39.

Le véhicule comporte par ailleurs un mécanisme 43 de déplacement du volet 35, permettant de déplacer le volet 35 entre sa position de repos et sa position soulevée quand le dossier 5 se déplace entre sa position dressée et sa position rabattue.

Plus précisément, le mécanisme 43 place le volet 35 dans sa position soulevée quand le dossier 5 est en position rabattue, et place le volet en position de repos quand le dossier 5 est en position dressée.

Le mécanisme de déplacement du volet comprend un ou plusieurs organes menant 45 liés au dossier 5, et une ou plusieurs glissières 47 liées à un bord avant 49 du volet 35.

La glissière 47 peut être une pièce rapportée (en plastique, métal etc.) ou peut être de même nature que le volet 35 et réalisée lors du formage de celui-ci.

Les organes menant 45 sont des biellettes espacées transversalement les unes des autres. Elles sont solidaires du dossier 5 en rotation autour de l'axe 13.

Plus précisément, la partie d'extrémité 51 de chaque biellette 45 est fixée sur le dossier du siège.

La biellette 45 porte à son extrémité opposée à la partie d'extrémité 51 un doigt 53 prévu pour être engagé et pour coulisser dans la glissière 47. Le doigt 53 est sensiblement parallèle à l'axe 13.

La glissière 47 est fixée sur la face inférieure 41 du volet 35, sous le bord avant 49. Elle est d'orientation sensiblement longitudinale, et présente une extrémité arrière 54 fermée et une extrémité avant ouverte. Dans une variante, l'extrémité arrière 54 peut également être ouverte. Elle est délimitée vers le haut et vers le bas par des bords longitudinaux supérieur 55 et inférieur 57. Le bord supérieur 55 de la glissière se prolonge vers l'avant au-delà du bord 57.

La glissière 47 est située à l'arrière du dossier 5 du siège.

Le fonctionnement du mécanisme de déplacement du volet décrit ci-dessus va maintenant être détaillé.

A l'état initial, on considère que le dossier 5 est en position dressée, et le volet 35 dans sa position de repos. Dans cette situation, le volet 35 et la zone principale 33 du plancher sont sensiblement dans un même plan, lequel peut-être horizontal.

Quand un utilisateur veut disposer des objets volumineux à bord du véhicule, il peut rabattre le dossier du siège vers l'avant, de manière à agrandir l'espace disponible pour charger les objets. Ces objets peuvent alors être logés à la fois dans l'espace de chargement et au-dessus du dossier en position rabattue.

Quand le dossier est dans sa position dressée, les biellettes 45 se trouvent dans des positions initiales dans lesquelles elles pointent sensiblement vers le bas du véhicule à partir de leurs parties d'extrémité 51. Dans cette position, chaque doigt 53 est désengagé de la glissière 47 et est situé à distance vers l'avant de la glissière 47. Quand le dossier se déplace depuis sa position dressée jusqu'à sa position rabattue, les biellettes 45 pivotent vers l'arrière à partir de leur position initiale jusqu'à des positions finales, représentées en traits mixtes.

Dans la position de repos du volet, comme le montre la figure, la partie avant 59 du bord supérieur 55 de la glissière qui se prolonge au-delà du bord inférieur 57 est située sur le cercle correspondant à la trajectoire du doigt 53 autour de l'axe 13.

A une position intermédiaire de la biellette représentée en traits mixtes, intermédiaire entre les positions initiale et finale, le doigt 53 de la biellette vient en contact contre la partie avant 59 du bord supérieur 55. Ainsi, entre la position initiale et la position intermédiaire de la biellette, le doigt 53 est désengagé de la glissière 47 et le volet 35 reste en position de repos.

Entre la position intermédiaire et la position finale, le doigt 53 pousse le bord supérieur 55 de la glissière 47 vers le haut et contraint le volet 35 à se soulever. Le volet 35 se déplace donc vers le haut au fur et à mesure que le dossier 5 se rabat vers sa position rabattue. Du fait du déplacement de la biellette et de la rotation du volet 35 autour du pivot 37, le doigt 53 coulisse à l'intérieur de la glissière 47. En position finale de la biellette 45, le doigt 53 est par exemple au fond de la glissière 47, c'est-à-dire à son extrémité arrière 54. Le volet 35 est maintenu en position en position soulevée par les biellettes 45.

Ainsi, le doigt 53 est engagé dans la glissière 47 entre la position intermédiaire et la position finale de la biellette.

Quand le dossier 5 passe de sa position rabattue à sa position dressée, chaque biellette 45 pivote de sa position finale à sa position initiale en suivant la rotation du dossier 5 du siège autour de l'axe 13, le volet passant simultanément de sa position soulevée à sa position de repos. Dans la première partie du déplacement, c'est-à-dire entre la position finale et une position proche de la position intermédiaire, le doigt 53 pousse le bord inférieur 57 de la glissière 47 vers le bas et contraint le volet 35 à descendre. Entre ladite position intermédiaire et la position initiale, le doigt n'est plus en contact avec la glissière 47.

Le véhicule automobile décrit ci-dessus présente de multiples avantages.

Du fait que le mécanisme de déplacement 43 du volet 35 comprend au moins un organe menant 45 fixé au dossier 5 et au moins une glissière 47 fixée au bord avant 49 du ou d'un volet 35 à l'intérieur de laquelle l'organe menant 45 est engagé libre en coulissement, la glissière 47 étant délimitée vers le haut et vers le bas par des bords inférieur 57 et supérieur 55 contre lesquels l'organe menant 45 est susceptible de prendre appui pour déplacer le volet 35 entre sa position soulevée et sa position de repos, le volet 35 est poussé par l'organe menant 45 vers le haut quand il passe de sa position de repos à sa position soulevée, et vers le bas quand il passe de sa position soulevée à sa position de repos. Au contraire, dans l'art antérieur FR 2 883 522, le volet 35 retombe de sa position soulevée à sa position de repos seulement sous l'effet de son propre poids, il y a donc un risque de coincement du volet 35 au cours de ce mouvement. Le fait d'appliquer au volet 35 une force vers le bas par l'intermédiaire de l'organe menant 45, fait que la probabilité que le volet 35 reste coincé est fortement diminuée.

Ainsi le volet est guidé lors de ses déplacements et maintenu en position soulevée. Il ne bloque pas lors de ses déplacements et il ne vibre pas en position soulevée

Par ailleurs, le fait que l'organe menant 45 soit fixé au dossier 5 du siège fait que la liaison entre l'organe menant 45 et le dossier 5 est particulièrement robuste. Ainsi, il est possible de déposer des charges dont le poids est compris entre 0.5kg et 100kg, par exemple environ 50kg ou bien environ 100kg, sur le volet 35 sans risque d'endommager le ou les organes menant 45, en particulier sans risque de désolidariser le ou les organes menant 45 du dossier 5. En effet les efforts sont transmis au dossier 5 du siège, lequel est robuste.

Quand le mécanisme 43 de déplacement du volet 35 comporte au moins deux organes menant espacés transversalement, le volet 35 est soutenu de manière plus robuste et peut supporter des charges plus lourdes. De plus le guidage du volet 35 est plus efficace.

Le mécanisme 43 de déplacement du volet 35 est pratiquement invisible pour l'utilisateur. En effet, la glissière 47 est masquée sous le volet 35.

Le mécanisme 43 de déplacement du volet 35 est simple et économique.

Si la face supérieure 39 du volet 35 et la face arrière 19 du dossier 5 sont sensiblement dans un même plan quand le dossier 5 est rabattu vers l'avant et le volet 35 en position soulevée, le véhicule présente pour le chargement une surface régulière, dépourvue de marche ou autre discontinuité pouvant constituer des butées quand on veut faire glisser une charge sur le plancher 11 du véhicule.

Le véhicule automobile décrit ci-dessus peut présenter de multiples variantes.

Le plancher 11 peut comprendre plusieurs volets 35. Dans un mode de réalisation particulier, un volet et un mécanisme de déplacement dédié sont associés à un siège de la seconde ou troisième rangée de sièges du véhicule. Lorsque le dossier d'un siège est rabattu, seul le volet associé à ce siège est soulevé, les autres restent en position de repos.

Dans un autre mode de réalisation, plusieurs volets 35 sont associés à un siège de la seconde ou troisième rangée de sièges du véhicule. Lorsque le dossier de ce siège est rabattu, tous les volets 35 associés à ce siège sont soulevés simultanément. Dans ce cas, le mécanisme de déplacement 43 comporte au moins un organe menant par volet et au moins une glissière par volet. Il peut par exemple comporter deux organes menant et deux glissières par volet. Alternativement, le mécanisme de déplacement peut comporter un organe menant commun à deux volets, et une glissière pour chacun des deux volets.

Le siège avec un dossier basculant a été décrit comme un siège de rang 2. Il pourrait être un siège de rang 1 (siège du passager avant) ou un siège de rang 3.

L'organe menant 45 n'est pas nécessairement une biellette mais peut être une pièce rigide de n'importe quelle forme, solidaire du dossier 5. Le mécanisme 43 de déplacement peut comporter un seul organe menant, deux organes menant ou plus de deux organes menant.

La glissière 47 peut être de n'importe quel type. Le mécanisme 43 de déplacement peut comporter une glissière 47 par organe menant 45, ou une glissière 47 unique s'étendant sur toute la largeur du volet 35 et coopérant avec tous les organes menant 45.

L'amplitude de la rotation du dossier 5, et du pivotement du volet 35 peut être quelconque.

Il est important de souligner que le mécanisme 43 de déplacement du volet 35 n'empêche pas un réglage en position longitudinale du siège. La longueur longitudinale de la glissière 47, et la différence de longueur entre le bord supérieur 55 et le bord inférieur 57 de la glissière, sont adaptées en fonction de l'amplitude longitudinale prévue pour le réglage en position du siège.

## Revendications

1. Véhicule automobile comprenant :
- au moins un siège (1), avec un dossier (5) mobile entre une position dressée et une position rabattue vers l'avant du véhicule ;
- un espace de chargement (9), situé à l'arrière du dossier (5), délimité vers le bas par un plancher (11), le plancher (11) comprenant au moins un volet (35) mobile délimité vers l'avant par un bord avant (49) ;
- au moins un mécanisme (43) de déplacement du ou de chaque volet (35) entre une position de repos et une position soulevée quand le dossier (5) se déplace entre sa position dressée et sa position rabattue ;
le mécanisme (43) de déplacement du ou de chaque volet (35) comprenant au moins un organe menant (45) fixé au dossier (5), **caractérisé en ce que** le mécanisme de déplacement du ou de chaque volet (35) comprend au moins une glissière (47) fixée au bord avant (49) du ou d'un volet (35) à l'intérieur de laquelle l'organe menant (45) est engagé libre en coulissement, la glissière (47) étant délimitée vers le haut et vers le bas par des bords supérieur et inférieur (55, 57) contre lesquels l'organe menant (45) est susceptible de prendre appui pour déplacer le volet (35) entre sa position soulevée et sa position de repos.

2. Véhicule selon la revendication 1, **caractérisé en ce que** le dossier (5) est mobile entre ses positions dressée et rabattue autour d'un axe de rotation (13), l'organe menant (45) étant solidaire du dossier (5) du siège en rotation autour de l'axe de rotation (13).

3. Véhicule selon la revendication 2, **caractérisé en ce que** le mécanisme (43) de déplacement du volet (35) comprend au moins deux organes menant (45), espacés le long de l'axe de rotation (13).

4. Véhicule selon l'une quelconque des revendications précédentes, **caractérisé en ce que** la glissière (47) est fixée à une face inférieure (41) du volet (35) tournée vers le bas.

5. Véhicule selon l'une quelconque des revendications précédentes, **caractérisé en ce que** la glissière (47) est ouverte à une extrémité, avant (54).

6. Véhicule selon l'une quelconque des revendications précédentes, **caractérisé en ce que** l'organe menant (45) se déplace depuis une position initiale jusqu'à une position finale quand le dossier (5) se déplace depuis sa position dressée jusqu'à sa position rabattue, l'organe menant (45) étant désengagé de la glissière (47) entre la position initiale et une position intermédiaire et engagé dans la glissière (47) entre la position intermédiaire et la position finale.

7. Véhicule selon la revendication 6, **caractérisé en ce que** le mécanisme (43) de déplacement du ou de chaque volet (35) est agencé pour que le ou chaque volet (35) soit maintenu en position lorsque l'organe menant (45) est position finale.

8. Véhicule selon la revendication 6 ou 7, **caractérisée en ce que** le mécanisme (43) de déplacement du ou de chaque volet (35) est agencé pour que le ou chaque volet (35) soit contraint de se déplacer lorsque l'organe menant (45) est engagé dans la glissière (47) entre sa position intermédiaire et sa position finale.

9. Véhicule selon l'une quelconque des revendications précédentes, **caractérisé en ce que** le plancher (11) comprend au moins une zone principale (33), et au moins une liaison pivot (37), du volet (35) à la zone principale (33).

10. Véhicule selon la revendication 9, **caractérisé en ce que** le dossier (5) est délimité vers l'arrière par une face arrière (19), le volet (35) étant délimité vers le haut par une face supérieure (39), la face supérieure (39) du volet (35) et la face arrière (19) du dossier (5) sont sensiblement dans un même plan quand le dossier (5) est en position rabattue vers l'avant et le volet (35) en position soulevée.

11. Véhicule selon l'une quelconque des revendications précédentes, **caractérisé en ce que** l'organe menant (45) est une biellette fixée sur le dossier (5) du siège.

12. Véhicule selon l'une quelconque des revendications précédentes, **caractérisé en ce que** le siège (1) est réglable en position longitudinalement d'avant en arrière dans une plage de positions déterminées, le mécanisme (43) de déplacement du ou de chaque volet (35) étant adapté pour permettre le déplacement du ou de chaque volet (35) quelle que soit la position du siège (1) dans la plage déterminée de positions.

13. Véhicule selon l'une quelconque des revendications précédentes, **caractérisé en ce que** le mécanisme (43) de déplacement du ou de chaque volet (35) et le ou chaque volet (35) sont adaptés pour supporter des charges allant jusqu'à 100kg, quelque soit la position du ou de chaque volet.

## Patentansprüche

1. Kraftfahrzeug umfassend:
- mindestens einen Sitz (1) mit einer Rücklehne (5), die zwischen einer aufgerichteten Position und zwischen einer nach vorn in Bezug auf das Fahrzeugs umgeklappten Position beweglich ist;
- einen Laderaum (9), der hinter der Rückenlehne (5) liegt und nach unten durch einen Boden (11) begrenzt ist, wobei der Boden (11) mindestens eine bewegliche Klappe (35) umfasst, die nach vorne durch einen vorderen Rand (49) begrenzt ist;
- mindestens einen Mechanismus (43) zum Bewegen der oder jeder Klappe (35) zwischen einer Ruheposition und einer angehobenen Position, wenn die Rückenlehne (5) sich zwischen der aufgestellten Position und der umgeklappten Position bewegt;
wobei der Mechanismus (43) zum Bewegen der oder jeder Klappe (35) mindestens ein Führungselement (45) umfasst, das an der Rückenlehne (5) befestigt ist, **dadurch gekennzeichnet, dass** der Mechanismus zum Bewegen der oder jeder Klappe (35) mindestens eine Gleitschiene (47) umfasst, die an dem vorderen Rand (49) der oder einer Klappe (35) befestigt ist, in deren Inneres das Führungselement (45) frei gleitend eingreift, wobei die Gleitschiene (47) nach oben und nach unten von einem oberen und einem unteren Rand (55, 57) begrenzt ist, gegen die sich das Führungselement (55) abstützen kann, um die Klappe (35) zwischen ihrer angehobenen und ihrer Ruheposition zu verschieben.

2. Fahrzeug nach Anspruch 1, **dadurch gekennzeichnet, dass** die Rückenlehne (5) zwischen ihrer aufgestellten und ihrer umgeklappten Position um eine Drehachse (13) beweglich ist, wobei das Führungselement (45) mit der Rückenlehne (5) des Sitzes um die Drehachse (13) drehbar verbunden ist.

3. Fahrzeug nach Anspruch 2, **dadurch gekennzeichnet, dass** der Mechanismus (43) zum Bewegen der Klappe (35) mindestens zwei Führungselemente (45) umfasst, die längs der Drehachse (13) beabstandet sind.

4. Fahrzeug nach einem beliebigen der vorhergehenden Ansprüche, **dadurch gekennzeichnet, dass** die Gleitschiene (47) an einer unteren Seite (41) der Klappe (35), nach unten gerichtet, befestigt ist.

5. Fahrzeug nach einem beliebigen der vorhergehenden Ansprüche, **dadurch gekennzeichnet, dass** die Gleitschiene (47) an einem vorderen Ende (54) offen ist.

6. Fahrzeug nach einem beliebigen der vorhergehenden Ansprüche, **dadurch gekennzeichnet, dass** das Führungselement (45) sich aus einer Anfangsposition bis zu einer Endposition bewegt, wenn die Rückenlehne (5) sich von ihrer aufgestellten Position bis in ihre umgeklappte Position bewegt, wobei das Führungselement (45) mit der Gleitschiene (47) zwischen der Anfangsposition und einer Zwischenposition nicht in Eingriff ist und zwischen der Zwischenposition und der Endposition in der Gleitschiene (47) im Eingriff ist.

7. Fahrzeug nach Anspruch 6, **dadurch gekennzeichnet, dass** der Mechanismus (43) zum Verschieben der oder jeder Klappe (35) derart angeordnet ist, dass die oder jede Klappe (35) in Stellung gehalten wird, wenn das Führungselement in der Endposition ist.

8. Fahrzeug nach Anspruch 6 oder 7, **dadurch gekennzeichnet, dass** der Mechanismus (43) zum Verschieben der oder jeder Klappe (35) derart angeordnet ist, dass die oder jede Klappe (35) gezwungen wird, sich zu bewegen, wenn das Führungselement (45) in der Gleitschiene (47) zwischen ihrer Zwischenposition und ihrer Endposition im Eingriff ist.

9. Fahrzeug nach einem beliebigen der vorhergehenden Ansprüche, **dadurch gekennzeichnet, dass** der Boden (11) mindestens eine Hauptzone (33) und mindestens eine Schwenkverbindung (37) der Klappe (35) an der Hauptzone (33) umfasst.

10. Fahrzeug nach Anspruch 9, **dadurch gekennzeichnet, dass** die Rückenlehne (5) nach hinten durch eine Rückfläche (19) begrenzt ist und die Klappe (35) nach oben durch eine obere Fläche (39) begrenzt ist, wobei die obere Fläche (39) der Klappe (35) und die Rückfläche (19) der Rückenlehne (5) im Wesentlichen in derselben Ebene liegen, wenn die Rückenlehne (5) in der nach vorn umgeklappten Position ist und die Klappe (35) in der angehobenen Position ist.

11. Fahrzeug nach einem beliebigen der vorhergehenden Ansprüche, **dadurch gekennzeichnet, dass** das Führungsorgan (45) ein an der Rückenlehne (5) des Sitzes befestigter Schenkarm ist.

12. Fahrzeug nach einem beliebigen der vorhergehenden Ansprüche, **dadurch gekennzeichnet, dass** der Sitz (1) hinsichtlich seiner Position in Längsrichtung von vorn nach hinten in einem Bereich von vorbestimmten Positionen einstellbar ist, wobei der Mechanismus (43) zum Bewegen der oder jeder Klappe (35) angepasst ist, die Bewegung der oder jeder Klappe (35), wie auch immer die Position des Sitzes (1) in dem Bereich der vorbestimmten Positionen sei, zu gestatten.

13. Fahrzeug nach einem beliebigen der vorhergehenden Ansprüche, **dadurch gekennzeichnet, dass** der Mechanismus (43) zum Bewegen der oder jeder Klappe (35) und die oder jede Klappe (35) angepasst sind, Belastungen bis zu 100 kg zu tragen, wie auch immer die Position der oder jeder Klappe sei.

## Claims

1. Motor vehicle comprising:
- at least one seat (1) with a backrest (5) which can be moved between an upright position and a position in which it is folded down towards the front of the vehicle:
- a load space (9) which is situated at the rear of the backrest (5) and is delimited in the downward direction by a floor (11), said floor (11) comprising at least one movable flap (35) which is delimited in the forward direction by a front edge (49);
- at least one mechanism (43) for displacing the flap (35), or each flap (35), between a rest position and a raised position when the backrest (5) is displaced between its upright position and its folded-down position;
the mechanism (43) for displacing the flap (35), or each flap (35), comprising at least one driving component (45) which is fixed to the backrest (5), **characterised in that** the mechanism for displacing the flap (35), or each flap (35), comprises at least one slide (47) which is fixed to the front edge (49) of the flap (35), or of a flap (35), and inside which the driving component (45) is engaged so as to be free in sliding motion, said slide (47) being delimited in the upward direction and in the downward direction by upper and lower edges (55, 57) against which the driving component (45) is capable of bearing in order to displace the flap (35) between its raised position and its rest position.

2. Vehicle according to Claim 1, **characterised in that** the backrest (5) can be moved between its upright and folded-down positions about an axis of rotation (13), the driving component (45) being integral with the backrest (5) of the seat in rotation about the axis of rotation (13).

3. Vehicle according to Claim 2, **characterised in that** the mechanism (43) for displacing the flap (35) comprises at least two driving components (45) which are spaced apart along the axis of rotation (13).

4. Vehicle according to any of the preceding claims, **characterised in that** the slide (47) is fixed to a lower face (41) of the flap (35) that faces in the downward direction.

5. Vehicle according to any of the preceding claims, **characterised in that** the slide (47) is open at one end, the front end (54).

6. Vehicle according to any of the preceding claims, **characterised in that** the driving component (45) is displaced from an initial position right up to a final position when the backrest (5) is displaced from its upright position right up to its folded-down position, said driving component (45) being disengaged from the slide (47) between the initial position and an intermediate position and engaged in said slide (47) between said intermediate position and the final position.

7. Vehicle according to Claim 6, **characterised in that** the mechanism (43) for displacing the flap (35), or each flap (35), is arranged so that said flap (35), or each flap (35), is held in position when the driving component (45) is in the final position.

8. Vehicle according to Claim 6 or 7, **characterised in that** the mechanism (43) for displacing the flap (35), or each flap (35), is arranged so that said flap (35), or each flap (35), is compelled to be displaced when the driving component (45) is engaged in the slide (47) between its intermediate position and its final position.

9. Vehicle according to any of the preceding claims, **characterised in that** the floor (11) comprises at least one main zone (33), and at least one pivoting link (37) from the flap (35) to said main zone (33).

10. Vehicle according to Claim 9, **characterised in that** the backrest (5) is delimited in the rearward direction by a rear face (19), the flap (35) being delimited in the upward direction by an upper face (39), and said upper face (39) of the flap (35) and said rear face (19) of the backrest (5) are substantially in the same plane when the backrest (5) is in the position in which it is folded down in the forward direction and the flap (35) is in the raised position.

11. Vehicle according to any of the preceding claims, **characterised in that** the driving component (45) is a link which is fixed onto the backrest (5) of the seat.

12. Vehicle according to any of the preceding claims, **characterised in that** the seat (1) is adjustable in position longitudinally from front to rear within a range of predetermined positions, the mechanism (43) for displacing the flap (35), or each flap (35), being adapted to permit the displacement of said flap (35), or of each flap (35), whatever the position of the seat (1) within the predetermined range of positions.

13. Vehicle according to any of the preceding claims, **characterised in that** the mechanism (43) for displacing the flap (35), or each flap (35), and said flap (35), or each flap (35), are adapted to carry loads of up to 100 kg, whatever the position of the flap, or of each flap.
